# EUROPEAN PATENT APPLICATION

(11) **EP 3 486 028 A1**
(43) Date of publication of application: **22.05.2019**
(21) Application number: 18204150.9
(22) Date of filing: 02.11.2018
(51) Int. Cl.: B23P 6/00, B23P 9/00, F01D 25/24, C21D 9/50, C21D 10/00, C21D 7/04, B24B 39/00, B24C 1/10

(54) **REPAIR OF COMPONENTS USING ADDITIVE MANUFACTURING WITH IN-SITU COLD WORKING**

(30) Priority: 02.11.2017 US 201715801943
(71) Applicant: United Technologies Corporation, Farmington, CT 06032 (US)
(72) Inventor: VARGAS, Chris, West Hartford, CT Connecticut 06119 (US); EL-WARDANY, Tahany Ibrahim, Vernon, CT Connecticut 06066 (US); KLECKA, Michael A, Coventry, CT Connecticut 06238 (US); GROW, Matthew, Glastonbury, CT Connecticut 06033 (US); KASHYAP, Tania Bhatia, West Hartford, CT Connecticut 06107 (US)
(74) Representative: Dehns

(57) **Abstract**

Aspects are directed to removing a portion (402) of a component (300) that includes wear to generate a void in the component (300), where a material of the component (300) has a first microstructure, depositing a filler material (508) in the void, subjecting the filler material (508) to a cold working technique to compress the filler material (508), and applying a heat treatment to cause the filler material (508) to have a second microstructure that is matched to the first microstructure. Aspects are directed to a case of an engine, including: a first portion with a first material that has a first microstructure, and a second portion with a second material that has a second microstructure, where the second microstructure is matched to the first microstructure, where the second material includes a plurality of layers, and where at least one layer of the plurality of layers includes a compressive residual stress.

## Description

### BACKGROUND

Engines, such as those which power aircraft and industrial equipment, may employ a compressor to compress air that is drawn into the engine and a turbine to capture energy associated with the combustion of a fuel-air mixture. Components of the engine may experience wear (e.g., corrosion, scratches, dents, nicks, cracks, material fatigue, abrasion, erosion, etc.) during the operating life of the engine. In some circumstances, it may be possible to replace a first instance of a component with a second instance of the component. For example, the second instance of the component may correspond to a spare instance of the component.

The amount/number of spares of a component that are available may be limited, such as for example if the component is no longer being produced/manufactured. The lack of spare component availability can significantly increase the cost of the spare component. Additionally, if a first instance of a component cannot be replaced with a second/spare instance of the component in a cost-effective/economical manner, an engine may need to be removed (e.g., retired) from service.

In order to mitigate a potential lack of availability of spare components, what is needed is an ability to restore a component to a state/condition acceptable for use in an engine. Additionally, what is needed is an ability to match one or more properties of the component following restoration to the properties of the component prior to restoration in order to ensure component quality and operability/functionality.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a method comprising: removing a portion of a component that includes wear to generate a void in the component, where a material of the component has a first microstructure, depositing a filler material in the void, subjecting the filler material to a cold working technique to compress the filler material, and applying a heat treatment to cause the filler material to have a second microstructure that is matched to the first microstructure. In some embodiments, the portion of the component is removed via an application of at least one of water jet machining, electron discharge machining, laser machining, milling process or grinding. In some embodiments, the void consumes an entirety of a wall thickness of the component. In some embodiments, the method comprises attaching a fixture to the component prior to depositing the filler material in the void. In some embodiments, the subjecting of the filler material to the cold working technique includes rolling the filler material with a roller to produce the second microstructure. In some embodiments, the method comprises adjusting at least one of the filler material, a geometry of the roller, and a load applied by the roller to the filler material to adjust a degree of compression of the filler material. In some embodiments, the method comprises applying a heat treatment to the component prior to depositing the filler material. In some embodiments, the method comprises subsequent to subjecting the filler material to the cold working technique, depositing additional filler material in the void, where the heat treatment is applied subsequent to the subjecting of the filler material to the cold working technique, and where the application of the heat treatment causes the filler material to undergo grain recrystallization. In some embodiments, the heat treatment includes at least one of a solution heat treatment, a stabilization heat treatment, or a precipitation heat treatment. In some embodiments, the heat treatment reduces a stress that is induced in the component from an earlier application of a solution heat treatment to the component or the cold working technique. In some embodiments, the method comprises machining the component to a specified dimension subsequent to subjecting the filler material to the cold working technique. In some embodiments, the method comprises imparting a compressive residual stress on the component subsequent to the application of the heat treatment. In some embodiments, the imparting of the compressive residual stress includes subjecting the component to at least one of deep rolling, laser shock peening, ultrasonic peening, shot peen, or burnishing. In some embodiments, the filler material is deposited as part of an additive manufacturing technique or a welding technique. In some embodiments, the method comprises installing the component on an engine subsequent to subjecting the filler material to the cold working technique. In some embodiments, the component is one of a case, a rotor blade, a vane, a liner, or a nozzle, and the method comprises identifying the wear in the component, and based on identifying the wear, removing the component from the engine prior to removing the portion of the component. In some embodiments, the wear is identified based on at least one of a visual inspection, an acoustic technique, or an ultrasonic technique.

Aspects of the disclosure are directed to a case of an engine, comprising: a first portion with a first material that has a first microstructure, and a second portion with a second material that has a second microstructure, where the second microstructure is matched to the first microstructure, where the second material includes a plurality of layers, and where at least one layer of the plurality of layers includes a compressive residual stress. In some embodiments, each layer of the plurality of layers includes a compressive residual stress. In some embodiments, the first material includes a nickel alloy.

### BRIEF DESCRIPTION OF THE DRAWINGS

The present disclosure is illustrated by way of example and not limited in the accompanying figures in which like reference numerals indicate similar elements. The figures are not necessarily drawn to scale unless explicitly indicated otherwise.
FIG. 1 is a side cutaway illustration of a gas turbine engine.
FIGS. 2-3 illustrate components subject to wear.
FIG. 4A illustrates the component of FIG. 3, with a portion of the component that includes wear removed to provide a void, where the removed portion consumes less than an entirety of a wall thickness of the component.
FIG. 4B illustrates the component of FIG. 3, with a portion of the component that includes wear removed to provide a void, where the portion consumes an entirety of a wall thickness of the component.
FIG. 5A illustrates the component of FIG. 4A with filler material added and a supporting fixture.
FIG. 5B illustrates the component of FIG. 4B with filler material added and a supporting fixture.
FIG. 6A illustrates the component of FIG. 5A with a roller applied to the filler material.
FIG. 6B illustrates the component of FIG. 5B with a roller applied to the filler material.
FIG. 7A illustrates the component of FIG. 4A with filler material consuming the void.
FIG. 7B illustrates the component of FIG. 4B with filler material consuming the void.
FIG. 8A illustrates a sample of as-deposited filler material.
FIG. 8B illustrates a sample of filler material subsequent to rolling the material.
FIGS. 9A-9C illustrate a flow chart of an exemplary method for restoring a component to a state/condition suitable for service.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems, and methods are described for restoring a component (e.g., a component of an engine) to a state/condition suitable for service. In some embodiments, a property (e.g., a microstructure) of the component following restoration may substantially match the property (e.g., the microstructure) of the component prior to restoration (and potentially even prior to wear imposed on the component).

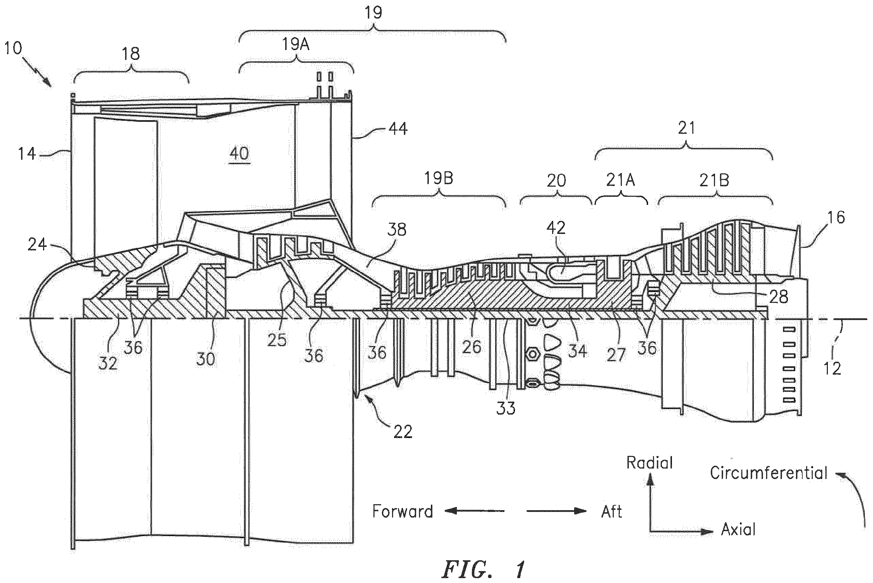

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36 (e.g., rolling element and/or thrust bearings). Each of these bearings 36 is connected to the engine housing 22 by at least one stationary structure such as, for example, an annular support strut.

As one skilled in the art would appreciate, in some embodiments a fan drive gear system (FDGS), which may be incorporated as part of the gear train 30, may be used to separate the rotation of the fan shaft 32 from the rotation of the low speed shaft 33. For example, such an FDGS may allow the fan shaft 32 to rotate at a different (e.g., slower) speed relative to the low speed shaft 33.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

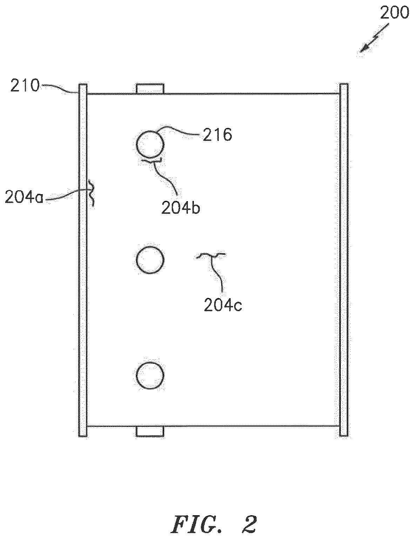

FIG. 2 illustrates a component 200 of an engine. The component 200 may correspond to a case/housing of the engine, such as for example the housing 22 of FIG. 1. In particular, the housing 200 is shown in a state/condition following use, where the housing 200 has developed wear as denoted by wear markings 204a, 204b, and 204c. Each of the wear markings 204a-204c may take one or more forms, such as for example one or more of corrosion, a scratch, a dent, a crack, material fatigue, etc.

Wear (e.g., cracks) may be prone to developing at so-called high-stress locations. Such high-stress locations may exist at various interfaces of the housing 200. For example, the wear 204a is shown as existing proximate a flange 210. Similarly, the wear 204b is shown as existing proximate a boss 216. However, as reflected by the wear 204c, wear may be experienced distant from any particular interface/feature associated with the housing 200; e.g., the wear 204c may be experienced by/present in the bulk of the housing 200 in some instances.

While the component 200 illustrated in FIG. 2 corresponds to a case/housing, aspects of the disclosure may be applied to other components, such as for example other components of an engine. Aspects of the disclosure may be used to address wear experienced by rotor blades (e.g., integrated rotor blades), vanes, liners, nozzles, etc. A component may include one or more materials, such as for example nickel, titanium, aluminum, etc. In some embodiments, a component may be made of a metal alloy.

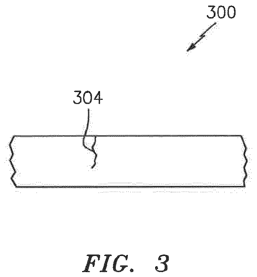

Referring to FIG. 3, a cross-sectional view through a thickness of a component 300 is shown. The component 300 is shown as having wear 304. The component 300 may correspond to the component 200 of FIG. 2; the wear 304 may correspond to one of the wear 204a-204c. In some instances, the wear 304 may include a crack.

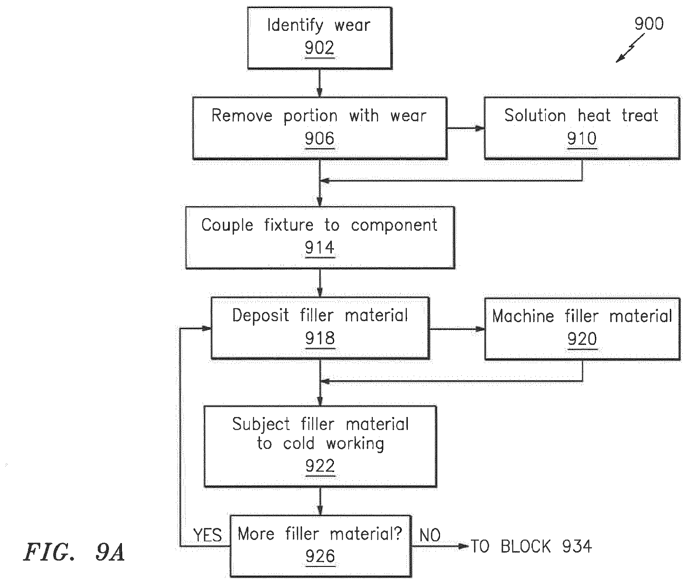

Referring to FIGS. 9A-9C, a flow chart of an exemplary method 900 is shown. The method 900 may be used to address wear experienced by a component in order to restore the component to a state/condition that is acceptable for use/suitable for service. The method 900 is described below in terms of addressing the wear 304 of the component 300 of FIG. 3 for ease in explanation. One skilled in the art will appreciate that the method 900 may be adapted to accommodate other components and/or other wear.

In block 902, the wear 304 may be identified. For example, the wear 304 may be identified during an inspection (which may be a part of a scheduled or unscheduled maintenance procedure). One or more techniques may be used to identify the wear 304. For example, a visual inspection, an acoustic technique, an ultrasonic technique, etc., may be used to identify the wear 304 in block 902. The wear 304 may be identified when the component 300 is installed on an engine. Alternatively, the component 300 may be removed from the engine prior to the identification of the wear 304.

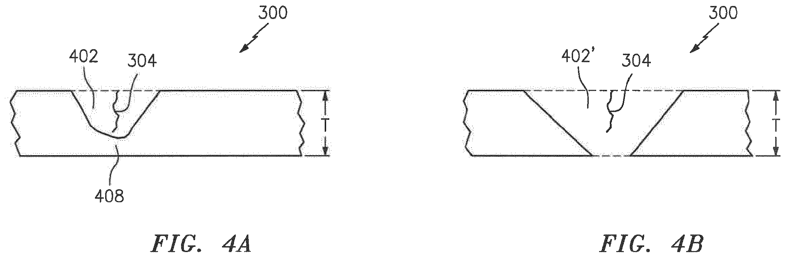

In block 906, a portion of the component 300 that includes the wear 304 may be removed. Application of a grinding/machining technique to the portion may be used in block 906. For example, and referring to FIGS. 3 and 4A, a portion 402 of the component 300 may be removed, where the portion 402 includes the wear 304. Following the removal of block 906, a portion 408 of the wall thickness of the component 300 may remain; in other words, the portion 402 may not fully traverse the complete wall thickness 'T' of the component 300. The portion 408 may serve as a substrate to receive deposited material as described further below. In contrast to FIG. 4A, FIG. 4B illustrates another embodiment where a portion 402' of the component 300 that includes the wear 304 is removed, such that the removed portion 402' traverses the complete wall thickness 'T'.

Whether the removal of block 906 adheres to a partial removal (e.g., FIG. 4A) or a complete removal (e.g., FIG. 4B) in terms of the wall thickness 'T' may be based on a depth that the wear 304 penetrates the component 300. For example, for a relatively minor/shallow penetration (e.g., penetration less than a threshold) a partial removal may be provided; for a relatively major/deep penetration (e.g., penetration greater than a threshold) a complete removal may be provided.

In block 910, a solution heat treatment (e.g., solution annealing) may be applied to the component 300. The application of the solution heat treatment may dissolve any precipitates that may be present in the material of the component 300 and transform the material at, e.g., a solution annealing temperature into a single phase structure. As a result of the execution of block 910, the (material of the) component 300 may be easier to work with. For example, execution of block 910 may enhance the weldability of the component 300.

While the blocks 906 and 910 are shown in FIG. 9A as executing serially/sequentially, the blocks 906 and 910 may be executed in parallel with respect to one another in some embodiments.

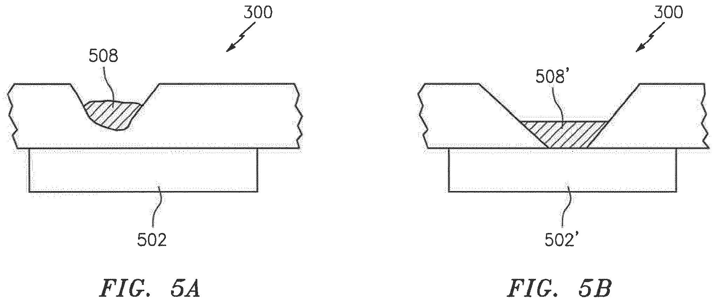

In block 914, a fixture/backing plate may be coupled to the component 300. For example, as shown in FIG. 5A a fixture 502 may be attached to the component 300. The fixture 502 may provide support to the component 300; for example, the fixture 502 may limit (e.g., prevent) movement of the component 300 during cold working operations described below. As shown in FIG. 5B, and as described further below, the addition of a fixture (e.g., fixture 502') may be used to retain filler material that is deposited in the void left by the portion that was removed in block 906 (particularly if the portion that is removed traverses the wall thickness 'T' of the component as shown in conjunction with the portion 402' of FIG. 4B; in such an instance, the fixture 502' may serve as a substrate to receive deposited material as described further below).

In block 918, filler material may be deposited in at least part of the void left by the removed portion (e.g., the portion 402 of FIG. 4A; the portion 402' of FIG. 4B) of block 906. For example, FIG. 5A shows material 508 that may be deposited and FIG. 5B shows material 508' that may be deposited. The material may be deposited in block 918 in one or more forms; for example, the material may be deposited in a powder form. The material may be deposited in block 918 as one or more layers. As part of block 918, an additive manufacturing technique (e.g., laser powder deposition, friction surfacing, wire arc additive manufacturing, cold spray, electron beam melting, directed energy deposition (DED), wire arc additive manufacturing (WAAM), solid state friction surfacing additive manufacturing (FSAM) processes etc.) may be applied. As part of block 918, a welding technique may be used.

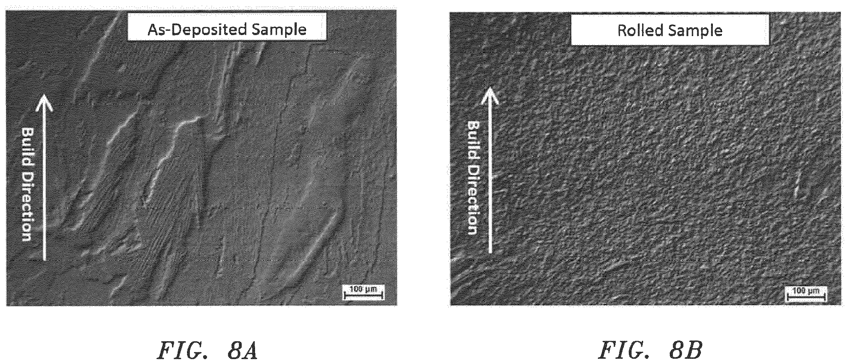

The material deposited in block 918 may be similar to a weld or cast microstructure (e.g., as molten metal is deposited and subsequently solidified). The material deposited in block 918 may be columnar in nature (e.g., may include columnar grains). FIG. 8A provides an example/sample of how the (filler) material may appear as-deposited, with the build-direction of the added material super-imposed.

In some embodiments, the material deposited in block 918 may be subject to machining as indicated in block 920. The machining operation of block 920 may ensure that (a surface of) the deposited material is prepared for cold working as described below.

In block 922, the filler material may be subjected to one or more cold working procedures/techniques. Cold working may be imparted by one or more of compressing, stretching, and combinations thereof, among other types of cold working techniques. Compressing means pushing at least one surface of a body in order to deform the body by reducing at least one dimension of the body. Compressing may include rolling or forging. Stretching means pulling a body in order to deform the body by expanding at least one dimension of the body.

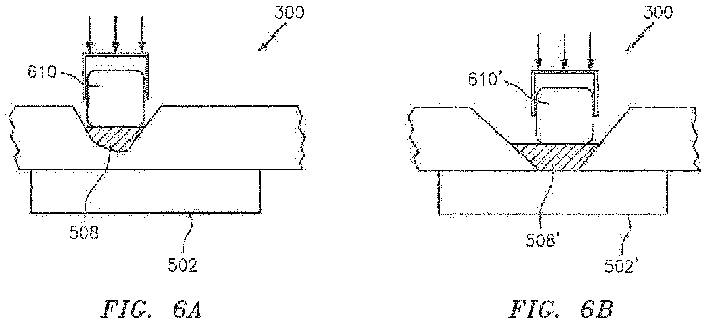

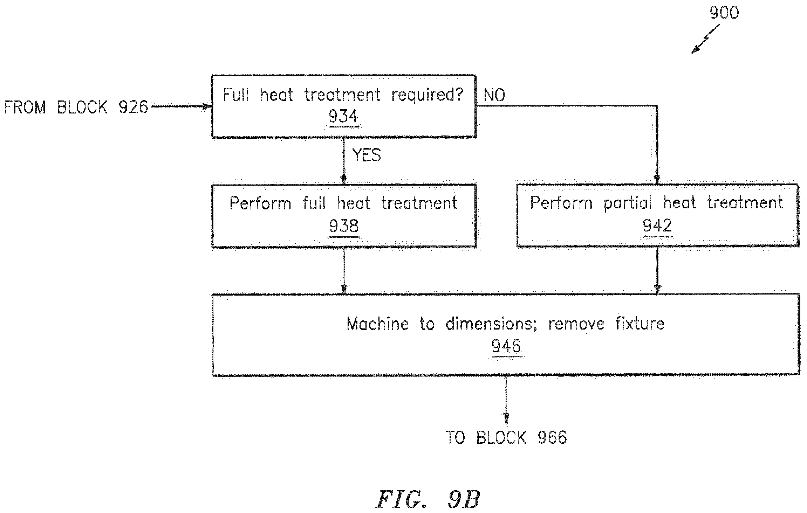

FIG. 6A illustrates a roller 610 applied to the filler material 508. Similarly, FIG. 6B illustrates a roller 610' applied to the filler material 508'. The application of a roller (as part of block 922) may cause the microstructure of the filler material to recrystallize during a deposition of additional filler material (see, e.g., block 926 of FIG. 9A - described further below) or during a subsequent heat treatment (blocks 938 or 942 - see FIG. 9B).

Based on the application of one or more cold working techniques in block 922 and/or the heat treatments of blocks 938 or 942 described further below, the microstructure may include fine, uniform equiaxed grains. For example, FIG. 8B provides an example/sample of how the (filler) material would appear following rolling, with the build-direction of the added material super-imposed. The microstructure illustrated in FIG. 8B may be typical of a wrought material (e.g., a wrought alloy), signifying the additional strength of the material beyond what is shown in FIG. 8A.

In some embodiments, application of one or more cold working techniques (e.g., application of a roller) in block 922 may compress the filler material. For example, execution of block 922 may compress a nickel alloy within a range of 0.5 millimeters to 1 millimeter; a titanium alloy may be compressed 0.7 millimeters to 1 millimeter; an aluminum alloy may be compressed upwards of 1.5 millimeters. The degree/extent of compression may be based on one or more of the filler material, a geometry/form-factor of the roller, and a load applied by the roller to the filler material. Adjustments may be made during the execution of the method 900 (e.g., adjustments may be made "on the fly") to adapt the extent/degree of compression that is obtained. One or more closed-loop/feedback mechanisms may be used to provide for the adjustments.

In block 926, a determination may be made whether additional filler material is to be added. If so (e.g., the "yes" path is taken out of block 926), flow may proceed to block 918. Otherwise if additional filler material is not needed (e.g., the "no" path is taken out of block 926), flow may proceed from block 926 to block 934 (see FIG. 9B). The flow from block 926 to block 918 may establish a loop of material deposition and cold working, allowing for recrystallization to occur.

In block 934, a determination may be made whether the component is to be subjected to a full heat treatment. If so (e.g., the "yes" path is taken out of block 934), flow may proceed from block 934 to block 938. Otherwise (e.g., the "no" path is taken out of block 934), flow may proceed from block 934 to block 942.

In block 938, a full heat treatment may be performed. A full heat treatment may (substantially) restore the component to a grade of service (e.g., a state/condition) comparable to the component as it existed following original manufacture (e.g., a so-called OEM component). The heat treatment applied in block 938 may include application of one or more of a solution heat treatment, a stabilization heat treatment, or a precipitation heat treatment. Application of a heat treatment in block 938 may eliminate some or all of any rolling residual stresses that may be present.

In block 942, a partial heat treatment may be performed. A partial heat treatment may restore the component to a grade of service that is appreciably less than that of an OEM component. The heat treatment that is applied in block 942 may reduce stress (e.g., residual stress) that may be present from, e.g., the deposition process (e.g., blocks 918 or 920), the solution heat treatment of block 910 and/or the cold working technique of block 922.

The heat treatment of block 938 or block 942 may recrystallize the last layer of deposited material that was cold worked.

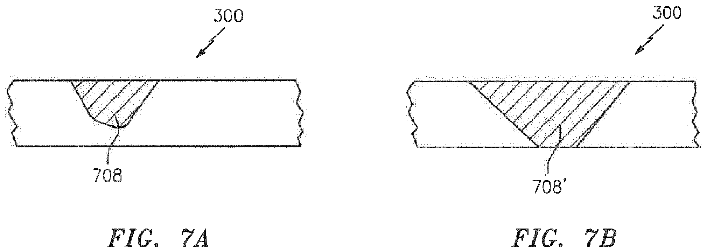

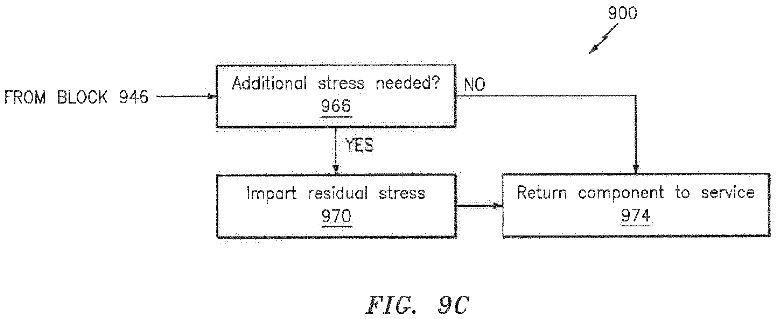

In block 946, the component may be machined to specified dimensions. The machining of block 946 may be used to remove any excess filler material that may have been deposited in conjunction with, e.g., block 918. Referring to FIG. 7A, the component 300 is shown with filler material 708 having substantially replaced the material of the portion 402 (see FIG. 4A). Similarly, in FIG. 7B the component 300 is shown with filler material 708' having substantially replaced the material of the portion 402' (see FIG. 4B). From block 946, flow may proceed to block 966 (see FIG. 9C). To the extent that a fixture/backing plate was added in, e.g., block 914, that fixture/backing plate may be removed as part of block 946.

In block 966, a determination may be made whether additional stress is needed. For example, the addition of compressive residual stress may improve/enhance the fatigue capability of the material of the component, such that the component may be utilized/operated for additional cycles/time before additional wear may be expected (or, more specifically, before the probability of additional wear exceeds a threshold). If additional residual stress is needed (e.g., the "yes" path is taken out of block 966), flow may proceed from block 966 to block 970. Otherwise (e.g., the "no" path is taken out of block 966), flow may proceed from block 966 to block 974.

In block 970, a (compressive) residual stress may be imparted on the component. As part of block 970, the component may be subjected to rolling, shot peen, burnishing, etc.

In block 974, the component may be returned to service. As part of block 974, the component may be installed on an engine.

The blocks of the method 900 described above are illustrative. In some embodiments, the blocks may execute in an order/sequence that is different from what is shown in FIGS. 9A-9C. In some embodiments, one or more of the blocks (or a portion thereof) may be optional. In some embodiments, additional blocks not shown may be included.

Aspects of the disclosure may provide a component that has a microstructure that is comparable (e.g., matched) to a microstructure of the component prior to restoration in accordance with an execution of the method 900. For example, a material of the component may have a first microstructure, and a second microstructure associated with filler material may be (substantially) matched to the first microstructure.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A method comprising:
removing a portion (402) of a component (300) that includes wear to generate a void in the component (300), where a material of the component (300) has a first microstructure;
depositing a filler material (508) in the void;
subjecting the filler material (508) to a cold working technique to compress the filler material (508); and
applying a heat treatment to cause the filler material (508) to have a second microstructure that is matched to the first microstructure.

2. The method of claim 1, wherein the portion (402) of the component (300) is removed via an application of at least one of a water jet machining, electron discharge machining, laser machining, milling process or grinding.

3. The method of claim 1 or 2, wherein the void consumes an entirety of a wall thickness of the component (300), and the method optionally further comprises attaching a fixture (502) to the component (300) prior to depositing the filler material (508) in the void.

4. The method of claim 1, 2 or 3, wherein the subjecting of the filler material (508) to the cold working technique includes rolling the filler material (508) with a roller (610) to produce the second microstructure.

5. The method of claim 4, further comprising:
adjusting at least one of the filler material (508), a geometry of the roller (610), and a load applied by the roller (610) to the filler material to adjust a degree of compression of the filler material.

6. The method of any preceding claim, further comprising:
applying a heat treatment to the component (300) prior to depositing the filler material (508).

7. The method of any preceding claim, further comprising:
subsequent to subjecting the filler material (508) to the cold working technique, depositing additional filler material (508) in the void,
wherein the heat treatment is applied subsequent to the subjecting of the filler material (508) to the cold working technique, and
wherein the application of the heat treatment causes the filler material (508) to undergo grain recrystallization,
wherein, optionally, the heat treatment includes at least one of a solution heat treatment, a stabilization heat treatment, or a precipitation heat treatment.

8. The method of any preceding claim, wherein the heat treatment reduces a stress that is induced in the component (300) from an earlier application of a solution heat treatment to the component (300) or the cold working technique.

9. The method of any preceding claim, further comprising:
machining the component (300) to a specified dimension subsequent to subjecting the filler material (508) to the cold working technique.

10. The method of any preceding claim, further comprising:
imparting a compressive residual stress on the component (300) subsequent to the application of the heat treatment,
wherein, optionally, the imparting of the compressive residual stress includes subjecting the component (300) to at least one of deep rolling, laser shock peening, ultrasonic peening, shot peen, or burnishing.

11. The method of any preceding claim, wherein the filler material (508) is deposited using one of an additive manufacturing processor a welding technique.

12. The method of any preceding claim, further comprising:
installing the component (300) on an engine subsequent to subjecting the filler material (508) to the cold working technique.

13. The method of claim 12, wherein the component (300) is one of a case, a rotor blade, a vane, a liner, or a nozzle, the method further comprising:
identifying the wear in the component (300); and
based on identifying the wear, removing the component (300) from the engine prior to removing the portion (402) of the component (300),
wherein, optionally, the wear is identified based on at least one of a visual inspection, an acoustic technique, or an ultrasonic technique.

14. A case of an engine, comprising:
a first portion with a first material that has a first microstructure; and
a second portion with a second material that has a second microstructure, where the second microstructure is matched to the first microstructure, where the second material includes a plurality of layers, and where at least one layer of the plurality of layers includes a compressive residual stress.

15. The case of claim 14, wherein;
each layer of the plurality of layers includes a compressive residual stress; and/or
the first material includes a nickel alloy.
